# EUROPEAN PATENT APPLICATION

(11) **EP 4 391 576 A1**
(43) Date of publication of application: **26.06.2024**
(21) Application number: 22874488.4
(22) Date of filing: 22.08.2022
(51) Int. Cl.: H04Q 9/00

(54) **AUTHORIZATION CONTROL METHOD AND APPARATUS FOR POWER DEVICE, ELECTRONIC DEVICE, AND STORAGE MEDIUM**

(30) Priority: 29.09.2021 CN 202111154822
(71) Applicant: ZTE Corporation, Shenzhen, Guangdong 518057 (CN)
(72) Inventor: ZHANG, Dedi, Shenzhen, Guangdong 518057 (CN); XIONG, Yong, Shenzhen, Guangdong 518057 (CN); WANG, Xiaobo, Shenzhen, Guangdong 518057 (CN); XIAO, Shengxian, Shenzhen, Guangdong 518057 (CN); TAO, Anxiang, Shenzhen, Guangdong 518057 (CN); SHI, Sichao, Shenzhen, Guangdong 518057 (CN)
(74) Representative: Chimini, Francesco
(86) International application number: PCT/CN2022/113999
(87) International publication number: WO 2023/051095

(57) **Abstract**

Embodiments of the present disclosure relate to the field of communication power sources, and in particular, to an authorization control method and apparatus for a power device, an electronic device, and a storage medium. The authorization control method for the power device includes: sending a protection setting command to an execution node, so that the execution node modifies a protection state to "protected" in responsive to the protection setting command; registering the execution node after receiving information indicative of successful protection setup fed back by the execution node; and sending a trigger command to the execution node after detecting startup of the execution node that has been registered and whose protection state is "protected".

## Description

### Cross-Reference to Related Application

The present disclosure is based on and claims priority to Chinese Patent Application No. 202111154822.1, filed on September 29, 2021, the disclosure of which is incorporated herein by reference in its entirety.

### Technical Field

The present disclosure relates to the field of communication power sources, and in particular, to an authorization control method and apparatus for a power device, an electronic device, and a storage medium.

### Background

Power conversion modules have a wide range of applications, such as power supplies, drive motors, Direct Current (DC) power transmission, etc., so a finished power conversion module can easily be used for other purposes. Based on its application value, the power conversion module may easily become a target for theft.

There are multiple solutions for anti-theft, one of which is an anti-theft device and system that detects theft based on radio waves. The anti-theft device includes a radio wave receiving component and a controlling component. The controlling component triggers an alarm when finding that the anti-theft device is located at a position where the receiving component is not able to detect monitoring radio waves at a frequency. Another solution is an intelligent positioning anti-theft system based on General Packet Radio Service (GPRS) and Global Positioning System (GPS), which belongs to the field of electronic detection and communication. This GPRS and GPS-based intelligent positioning anti-theft system includes an intelligent positioning anti-theft host, a user terminal system, and an item positioning system. The intelligent positioning anti-theft host consists of a sensing unit, a controlling unit, a communication unit, and a power supply unit. The user terminal system consists of a signal transceiving unit and a display and operation unit, wherein the display and operation unit includes an alarm system. The item positioning system is an independent system formed by a positioning unit that has communication functionality.

However, although the anti-theft device that detects theft based on radio waves can achieve anti-theft within a small range, a hardware device for receiving and transmitting the radio waves needs to be added; and although an intelligent positioning anti-theft system based on the GPRS and the GPS can perform positioning and tracking, high hardware cost and space cost would be required.

### Summary

Provided is an authorization control method for a power device, which is performed by a control node. The authorization control method includes: sending a protection setting command to an execution node, so that the execution node modifies a protection state to "protected" in responsive to the protection setting command; registering the execution node after receiving information indicative of successful protection setup fed back by the execution node; and sending a trigger command to the execution node after detecting startup of the execution node that has been registered and whose protection state is "protected".

Also provided is an authorization control method for a power device, which is performed by an execution node. The authorization control method includes: receiving a protection setting command sent by a control node; modifying a protection state to "protected", and feeding back information indicative of successful protection setup to the control node, so that the control node registers the execution node upon receiving the information indicative of successful protection setup; and under a condition that the protection state is "protected", in a case where no trigger command sent by the control node is received within a preset time, prohibiting operation of the power device.

Also provided is an authorization control apparatus for a power device, which is provided in a control node. The authorization control apparatus includes: a first sending module, configured to send a protection setting command to an execution node, so that the execution node modifies a protection state to "protected" in responsive to the protection setting command; a registration module, configured to register the execution node after receiving information indicative of successful protection setup fed back by the execution node; and a second sending module, configured to send a trigger command to the execution node after detecting startup of the execution node that has been registered and whose protection state is "protected".

Also provided is an authorization control apparatus for a power device, which is provided in an execution node. The authorization control apparatus includes: a receiving module, configured to receive a protection setting command sent by a control node; a protection setting module, configured to modify a protection state to "protected", and feed back information indicative of successful protection setup to the control node, so that the control node registers the execution node upon receiving the information indicative of successful protection setup; and an execution module, configured to, under a condition that the protection state is "protected", in a case where no trigger command sent by the control node is received within a preset time, prohibit operation of the power device.

Also provided is an authorization control system for a power device, including a control node and an execution node, wherein the control node is configured to execute the authorization control method for the power device which is performed by the control node; and the execution node is configured to execute the authorization control method for the power device which is performed by the execution node.

Also provided is an electronic device, including at least one processor and a memory communicatively coupled to the at least one processor, wherein the memory stores instructions executable by the at least one processor, and the instructions, when executed by the at least one processor, cause the at least one processor to execute the authorization control method for the power device which is performed by the control node, or the authorization control method for the power device which is performed by the execution node.

Also provided is a computer-readable storage medium storing a computer program, wherein the computer program, when executed by a processor, causes the processor to execute the authorization control method for the power device which is performed by the control node, or the authorization control method for the power device which is performed by the execution node.

### Brief Description of the Drawings

Fig. 1 is a flowchart of an authorization control method for a power device according to an embodiment of the present disclosure;
Fig. 2 is a flowchart of a protection revoking operation of a power device according to an embodiment of the present disclosure;
Fig. 3 is a flowchart of an authorization control method for a power device according to another embodiment of the present disclosure;
Fig. 4 is a physical block diagram of an authorization control system for a power device according to a first embodiment and a second embodiment of the present disclosure;
Fig. 5 is a first schematic diagram of an authorization control apparatus according to another embodiment of the present disclosure;
Fig. 6 is a second schematic diagram of an authorization control apparatus according to another embodiment of the present disclosure; and
Fig. 7 is a schematic structural diagram of an electronic device according to another embodiment of the present disclosure.

### Detailed Description

The embodiments of the present disclosure mainly provide an authorization control method and apparatus for a power device, an electronic device, and a storage medium, so that anti-theft of a power module can be realized without increasing hardware costs, and the operation is simple and easy to be realized.

To make the objectives, technical solutions, and advantages of the embodiments of the present disclosure clearer, the following describes various embodiments of the present disclosure in detail with reference to the accompanying drawings. However, a person having ordinary skill in the art may understand that, in the embodiments of the present disclosure, many technical details are put forward to help a reader understand the present disclosure better, but even without these technical details and various changes and modifications based on the following embodiments, the claimed technical solutions of the present disclosure can still be implemented. The division of the following embodiments is for convenience of description, and shall not constitute any limitation to exemplary implementations of the present disclosure. The embodiments may be referred to in combination with each other without any contradiction.

An embodiment of the present disclosure relates to an authorization control method for a power device, which is performed by a control node. In this embodiment, in a case of detecting that a protection state of an execution node is "not protected", the control node sends a protection setting command to the execution node, so that the execution node modifies, according to the protection setting command, the protection state to "protected"; after the control node receives information indicative of successful protection setup fed back by the execution node, the control node registers the execution node to bind the execution node with the control node, so that after the control node detects startup of the execution node, the control node queries the protection state and registration information of the execution node, and sends a trigger command to the execution node to enable the execution node to control normal operation of the power module. By virtue of the technical solution, the normal operation of the execution node is controlled only by sending a trigger command by the control node without increasing hardware costs, thereby realizing the anti-theft of the power module.

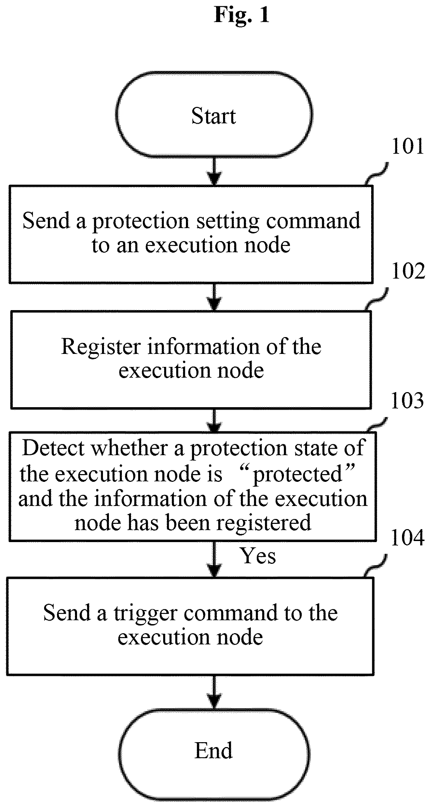

The implementation details of the authorization control method for the power device in this embodiment are described in detail as follows. The following content is only for ease of understanding of the provided implementation details and is not essential for implementing this solution. A specific process of the authorization control method for the power device in this embodiment may be as shown in Fig. 1, including the following operations 101 to 104.

In operation 101, a protection setting command is sent to an execution node.

In this embodiment, the control node may be a monitoring unit, and the control node and the execution node may conduct communication between each other based on a protocol. The control node may first acquire a protection state and a unique identification code of the power module. Since the execution node is embedded in the power module, the unique identification code of the power module is the unique identification code of the execution node, and the execution node may directly control the operation of the power module. In some exemplary implementations, the power module may be a rectifier. In a case of detecting that the protection state of the execution node is "not protected", the control node sends a protection setting command to the execution node, so that the execution node modifies the protection state to "protected", and after modifying the protection state to "protected", the execution node sends, to the control node, information indicative of successful protection setup.

In an example, the control node directly sends a protection setting command to the execution node, and the execution node modifies the protection state according to the protection setting command sent directly by the control node.

In another example, the control node receives a protection setting command sent from a remote authorization device, and forwards the received protection setting command sent from the remote authorization device to the execution node, and then the execution node modifies the protection state according to the protection setting command forwarded by the control node.

In an exemplary implementation, the protection states and the unique identification codes of a plurality of power modules are stored in the control node, and therefore the control node may send a protection setting command to any execution node according to requirements.

In operation 101, the protection setting command sent by the control node to the execution node may also carry attribute information of the execution node, so that the execution node determines whether the received attribute information matches its own attribute information.

In operation 102, information of the execution node is registered.

After receiving the information indicative of successful protection setup fed back by the execution node, the control node registers the execution node. After the execution node sets the protection state to "protected", information indicative of successful protection setup is fed back to the control node. After receiving the information indicative of successful protection setup fed back by the execution node, the control node may register the execution node according to the acquired unique identification code of the execution node, so as to complete matching and binding between the control node and the execution node, thereby completing the protecting setting process.

In operation 103, whether the protection state of the execution node is "protected" and the information of the execution node has been registered is detected.

After detecting startup of an execution node, the control node first determines the protection setting state and registration information of the execution node. In an example, in a case where the control node detects that the protection setting state of the execution node is "protected", and the information of the execution node has been registered in the control node, then the control node proceeds to execute operation 104.

In operation 104, a trigger command is sent to the execution node.

After detecting startup of the execution node that has been registered and whose protection state is "protected", the control node sends a trigger command to the execution node. After the control node is matched and bound with the execution node, the control node needs to send a trigger command to the execution node, and the execution node can operate normally only after receiving the trigger command. Therefore, when the control node operates normally, in a case where it is detected that a certain execution node has been powered on and started, the control node queries the protection state and registration information of the execution node, and after it is detected that the protection state of the execution node is "protected" and the information of the execution node is already registered, the control node sends a trigger command to the execution node, so as to enable normal operation of the execution node.

In an example, the control node sends a trigger command to the execution node, so as to ensure normal operation of the execution node, wherein the control command does not carry attribute information.

In operation 103, in a case where the control node detects that the protection state of the execution node is "protected" but the information of the execution node is not registered in the control node, the control node regards the execution node as an external execution node, and thus does not send a trigger command to the execution node. After being powered on and started, in a case where no trigger command sent by the control node is received, the execution node does not normally operate, and modifies the protection state to "abnormal".

In an example, the protection state of the execution node would be "abnormal" when the information of the execution node is not successfully registered due to the influence of the network or other factors, i.e., when the binding between the control node and the execution node fails. In order to enable the execution node to operate normally, the control node may be manipulated to send a trigger command so as to enable normal operation of the execution node, or a protection revoking operation may be performed on the execution node, that is, the matching and binding between the control node and the execution node may be canceled.

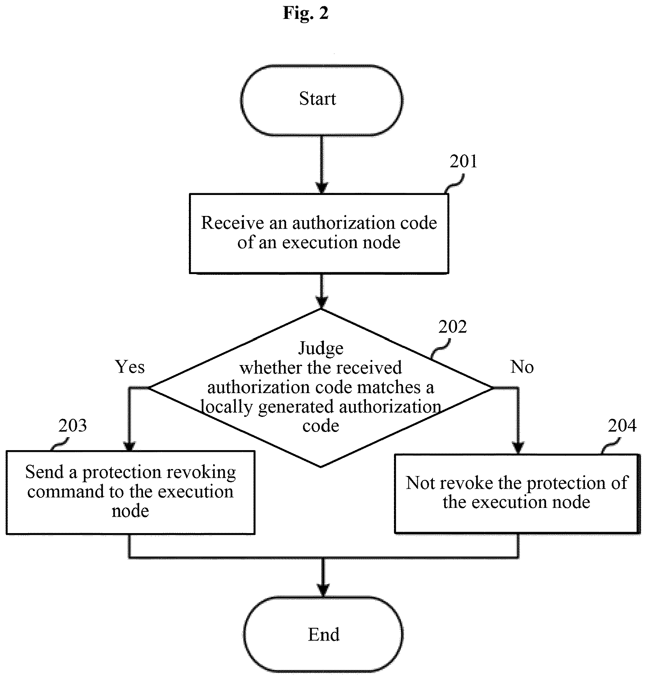

In order to ensure the feasibility of the authorization control method of the present embodiment, when a protection revoking operation needs to be performed on the execution node, the control node cannot directly send a protection revoking command, and the protection revoking operation can only be executed with the authorization of a remote authorization device. An exemplary implementation process of the protection revoking operation can be implemented by the following sub-operations, and the specific flow, as shown in Fig. 2, includes the following operations 201 to 204.

In operation 201, an authorization code of an execution node is received.

If a protection revoking operation needs to be performed on the execution node, the administrator first applies to the execution node for a unique identification code of the execution node, then sends the applied unique identification code to the remote authorization device, and the remote authorization device uses an authorization code generation algorithm to calculate and obtain an m-bit authorization code based on the unique identification code of the execution node, and sends the generated authorization code to the administrator, so that the authorization code is input into the control node by the administrator.

In an example, according to the authorization code generation algorithm, a reserved string (106 characters '0') and a date string (YYMMDD0000) are concatenated sequentially to the unique identification code of the execution node to obtain a new character string, and the character string is transposed. The reserved string and the date string are concatenated to the transposed character string again to obtain a character string s1. The character string s1 is encoded by using an utf-8 encoding method, the encoded character string is encrypted by using a SHA256 algorithm, and the encrypted result is presented in a hexadecimal manner to obtain a new character string s2. s2, "xxxxxxxx", and 54 "0" are concatenated sequentially to obtain a character string s3, then a CRC--32 algorithm is used to process the character string s3 to output an 8-bit hexadecimal check code, and the 8-bit hexadecimal check code is converted in the form of a character string to obtain an authorization code. The fixed character string "xxxxxxxx" added after the character string s2 is the same character length (i.e., 64) as that of the character string s2, and the fixed character string, as padding content, may be vendor information, user information, or password information, thereby further reducing the repetition of the generation result of the CRC-32 algorithm while expanding the discrimination range.

In exemplary implementation, the authorization code uses a two-level (i.e., SHA256 and CRC-32) encryption algorithm, so as to minimize the repetition probability of the authorization code, facilitate on-site inputting, and increase the usability. In addition, the unique identification code and the reserved bit string for generating the authorization code may be any one of vendor information, region information, user information, and a MAC address, and may also be a combination of a plurality of information types, which increases the expansibility of the algorithm for generating the authorization code, and is applicable to different application scenarios.

In operation 202, it is determined whether the received authorization code matches the locally generated authorization code.

After receiving the m-bit authorization code input by the administrator, the control node calculates an m-bit authorization code based on the unique identification code of the execution node according to the authorization code generation algorithm stored in the control node. The calculation process is the same as the process in operation 201, and is not repeated herein. In the case where the control node receives the authorization code of the execution node, the control node matches the received authorization code with the locally generated authorization code of the execution node. In a case where the matching succeeds, it indicates that the execution node is a valid execution node, and in order to enable the valid execution node to continue to operate normally, the flow proceeds to operation 203, and the control node sends a protection revoking command to the execution node, so that the execution node modifies the protection state to "not protected". In a case where the matching fails, it indicates that the execution node may be an external invalid execution node, and there is a risk of theft, then the flow proceeds to sub-operation 204, and the protection revoking operation is not performed for the execution node.

The hardware cost and the space cost will be increased when the anti-theft of the power module is achieved by means of radio wave detection or by using an intelligent positioning and anti-theft system based on GPRS and GPS, the overall cost is too high and is difficult to achieve. However, in the embodiments of the present disclosure, the control node sends a protection setting command to the execution node in the power module and registers information of the execution node to match and bind the control node with the execution node, so that the control node can control the operation of the execution node in real time, that is to say, the control node sends a trigger command to trigger the normal operation of the power module, thereby preventing the power module from being stolen without increasing hardware costs, and realizing the anti-theft of the power module. Furthermore, when a protection revoking operation needs to be performed for the execution node so as to enable the execution node to operate normally, authorization of a remote device is required, thereby improving security of the authorization control method according to this embodiment.

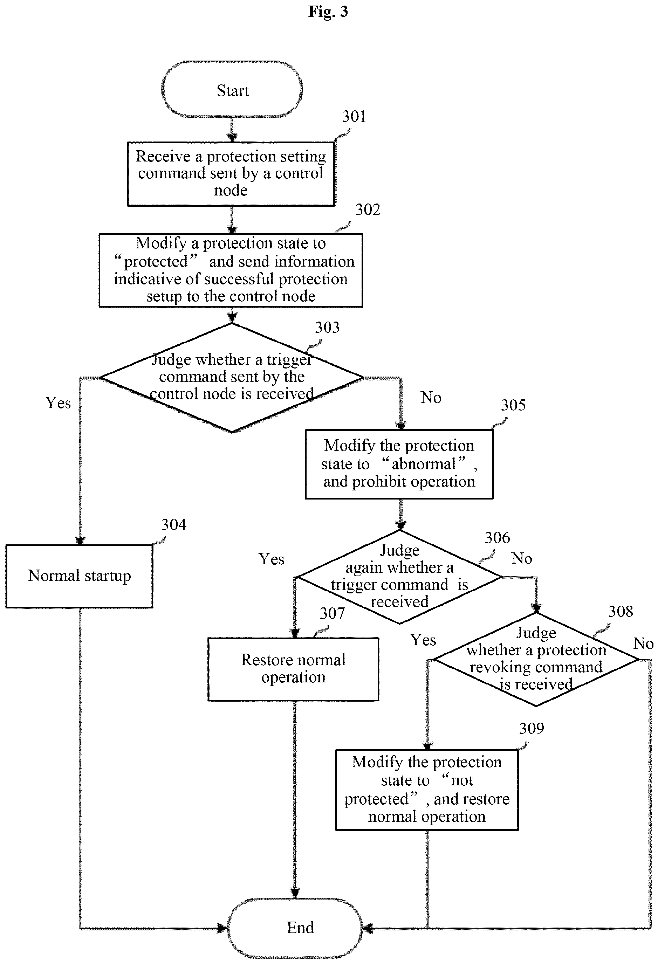

Another embodiment of the present disclosure relates to an authorization control method for a power device, which is performed by an execution node. The implementation details of the authorization control method for the power device of this embodiment are specifically described below. The following content is only implementation details provided for ease of understanding, and is not essential for implementing this solution. A specific process, as shown in Fig. 3, may include the following operations 301 to 309.

In operation 301, the execution node receives a protection setting command sent by a control node.

The execution node is embedded in a power module to directly control the operation of the power module, and the execution node has three protection states: "not protected", "protected" and "abnormal". When the execution node is in the "not protected" state, the execution node receives a protection setting command sent by the control node.

In an example, the protection setting command carries attribute information of the execution node, wherein the attribute information includes vendor information and version information of the execution node. The execution node may match the attribute information sent by the control node with the attribute information of the execution node itself. In a case where the matching succeeds, the execution node performs an operation according to the protection setting command that is sent by the control node and carries the attribute information. In a case where the matching fails, the execution node rejects any action in responsive to the protection setting command of the control node. In this embodiment, the execution node in the "not protected" state may control the power module to operate normally.

In operation 302, the execution node modifies the protection state to "protected", and feeds back information indicative of successful protection setup to the control node.

The execution node determines whether attribute information carried in the protection setting command sent by the control node matches attribute information of the execution node. In a case where the attribute information carried in the protection setting command matches the attribute information of the execution node, the execution node modifies the protection state from "not protected" to "protected", and feeds back information indicative of successful protection setup to the control node, so that the control node registers the execution node.

In operation 303, the execution node judges whether a trigger command sent by the control node is received.

After being powered on and started up, the execution node judges its own protection state. When the protection state is "protected", the execution node needs to wait for a preset time to ensure normal execution of the control node, the execution node may operate normally within the preset time, and keep operating normally after receiving a trigger command sent by the control node within the preset time, in a case where the trigger command sent by the control node is not received within the preset time, the execution node stops operating, modifies the protection state to "abnormal", and restores normal operation after a trigger command sent by the control node is received.

In an example, after the execution node is started, the execution node waits for 5 minutes and operates normally within the waiting 5 minutes, and in a case where a trigger command sent by the control node is received within the 5 minutes, the power module is controlled to output normally, that is, operation 304 is executed to complete a normal start process of the execution node.

In another example, in a case where the execution node does not receive the trigger command sent by the control node within 5 minutes, the execution node stops operating (i.e., no longer outputting power), and at the same time, modifies the protection state to "abnormal", and then performs operation 305 to prohibit the operating of the power module.

In operation 304, the execution node starts normally.

The execution node receives the trigger command sent by the control node, and controls the power module to operate normally.

In an example, the execution node receives the trigger command sent by the control node, and controls, according to the trigger command, the power module to operate normally, wherein the trigger command does not carry attribute information of the execution node.

In an exemplary implementation, after the execution node is started, a first operating mechanism is that the command sent by the control node is received only for a fixed number of times, and the execution node can continue to operate normally even after being detached from the control node; and a second operating mechanism is that the command sent by the control node is periodically received, and in this case, the execution node cannot be detached from the control node.

In operation 305, the execution node modifies the protection state to "abnormal" and prohibits operation of the power device.

In operation 306, the execution node determines again whether the trigger command is received.

After the protection state of the execution node becomes "abnormal", the execution node continues to wait for the control node to send a trigger command; in a case where it is determined that the execution node receives the trigger command sent by the control node, the flow proceeds to operation 307, and the execution node restores normal operation; and if it is determined that the execution node still does not receive the trigger command sent by the control node, the flow proceeds to operation 308.

In operation 308, the execution node determines whether a protection revoking command is received.

In a case where the execution node does not receive the trigger command sent by the control node all the time, it determines whether a protection revoking command sent by the control node is received; in a case where the protection revoking command is received, the process proceeds to operation 309, in which the execution node modifies the protection state to "not protected", and restores normal operation.

In this embodiment, after the execution node is matched and bound with the control node, once the execution node is detached from the control node matched with the execution node, the execution node stops operating after waiting for a certain time. By virtue of the solution, the protection setting and protection revoking operation can be achieved only based on the command of the control node, thereby simplifying implementation logic of the execution node, and reducing the running space and storage space occupied by a program to the maximum extent.

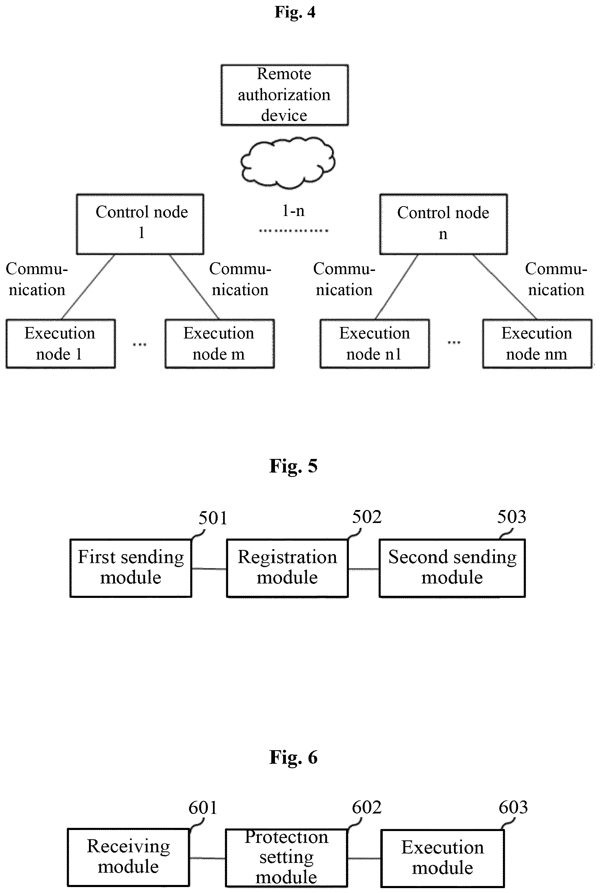

Fig. 4 is a physical block diagram of an authorization control system for a power device according to a first embodiment and a second embodiment of the present disclosure. The authorization control system includes: a remote authorization device, a control node and an execution node (one or more execution nodes).

In an example, the execution node may establish a one-to-many relationship with the control node based on a unique identification code of the execution node, may alternatively establish a manyto-many relationship with the control node based on a region code, and may alternatively establish a matching relationship with the control node based on other information, such as user information and version information.

In the first embodiment and the second embodiment, the control node may be a monitoring unit in the power supply system, and the power device can continue to operate only when the power device matches the power supply system. The remote authorization device may be a power supply network management system. After the protection setup is successful, only by applying an authorization code from the power supply network management system and inputting the authorization code on an interface of the power supply system, can the matching be cancelled, and the protection state of the power device be modified to "not protected", so that the power device can continue to operate. The power supply system may be a server, and the interface of the power supply system is a man-machine interaction interface, that is, the administrator cancels a matching relationship between the power device and the power supply system by inputting an authorization code on the man-machine interaction interface.

The protection setting operation may be started on the power supply user interface or remotely started through the power supply network management system, but the protection setting operation can only be remotely started through the power supply network management system.

In an example, multiple power devices are configured in a power supply system, and the power devices can operate only when the power devices match the power supply system; at the same time, an authorization code can only be applied for through a remote power supply network management system, and the authorization code is input in the interface of the power supply system to cancel the matching relationship. The specific process is described as follows.

A protection process: the power supply system acquires a protection state and a unique identification code from a power device via a communication protocol, then determines the protection state, and when the protection state is "not protected", the power supply system sends a protection setting command to the power device; after receiving the protection setting command, the power device modifies the protection state to "protected", and after completing the protection setup, returns success information to the power supply system; after receiving the returned success information, the power supply system registers the information of the execution node by using the unique identification code as an identifier, and completes a protection setting process of the power supply system and the power device.

A normal start-up process of the power device whose protection state is "protected": after being powered on and started up, the power device judges the protection state of the power device, when the protection state is "protected", then the power device waits for the power supply system to send a trigger command via a communication protocol, and can normally operate when the trigger command is received within 5 minutes; after detecting that the power device is started, the power supply system queries the protection state and the unique identification code, and when the acquired protection state is "protected" or "abnormal" and the unique identification code has been registered in the power supply system, the power supply system sends a trigger command to the power device via a communication protocol; after receiving the trigger command sent by the power supply system, the power device keeps outputting normally, and completes a normal startup process.

An abnormal start-up process of the power device whose protection state is "protected": after being powered on and started, the power device judges the protection state of the power device, when the protection state is "protected", then the power device waits for the power supply system to send a trigger command via a communication protocol, and can normally operate when the trigger command is received within 5 minutes; after detecting that the power device is started, the power supply system queries the protection state and the unique identification code, and when the acquired protection state is "protected" or "abnormal" but the unique identification code has not been registered in the power supply system, the power supply system does not send a trigger command to the power device; when the power device does not receive a trigger command of the power supply system within 5 minutes, the power device stops operating and does not output any more, and at the same time, modifies the protection state to "abnormal", and completes abnormal starting of the power device.

A protection revoking process of the power device whose protection state is "protected": the power supply system queries that the protection state of the power device is "abnormal", when a protection revoking operation needs to be performed for the power device, the administrator needs to send the unique identification code of the power device whose protection state is "abnormal" to the power supply network management system; the network management system receives the unique identification code of the power device of which the protection state is "abnormal", generates an 8-bit authorization code according to a fixed algorithm by taking the unique identification code as an input, and returns the 8-bit authorization code to the administrator; the administrator inputs the received authorization code into the power supply system via a user interface, and the power supply system uses the unique identification code of the power device as an input to generate an 8-bit authorization code according to the same fixed algorithm, then compares the generated 8-bit authorization code with the authorization code input by the administrator, and when they are the same, the power supply system sends a protection revoking command to the power device; after receiving the protection revoking command, the power device modifies the protection state to "not protected", and restores normal operation at the same time.

In another example, multiple power devices are configured in a power supply system, and the power devices can operate only when the power devices match the power supply system; the protection setting operation can be started on a user interface of the power supply system or remotely started through a power supply network management system, but the protection revoking operation can only be remotely started through the power supply network management system. The specific process is described as follows.

A protection process: the power supply network management system acquires a protection state and a unique identification code of a power device from a power supply system, then determines the protection state, and when the protection state is "not protected", the power supply network management system sends a protection setting command to the power device; after receiving the protection setting command, the power device modifies the protection state to "protected", and after completing the protection setup, returns success information to the power supply system; after receiving the returned success information, the power supply system registers the information of the execution node by using the unique identification code as an identifier, and then returns the success information to the power supply network management system to complete the whole protection setting process.

A protection revoking process of the power device whose protection state is "protected": the power supply system queries that the protection state of the power device is "abnormal", when a protection revoking operation needs to be performed for the power device, the administrator needs to send the unique identification code of the power device whose protection state is "abnormal" to the network management system; the network management system receives the unique identification code of the power device of which the protection state is "abnormal", generates an 8-bit authorization code according to a fixed algorithm by taking the unique identification code as an input, then finds a corresponding power device according to the unique identification code, and directly sends the 8-bit authorization code to the power supply system; the power supply system uses the unique identification code of the power device as an input to generate an 8-bit authorization code according to the same fixed algorithm, then compares the generated 8-bit authorization code with the authorization code sent by the power supply network management system, and when they are the same, the power supply system sends a protection revoking command to the power device; after receiving the protection revoking command, the power device modifies the protection state to "not protected", and restores normal operation at the same time.

The operation division of the described various methods is only for describing clearly, and during implementation, multiple operations may be combined into one operation or a certain operation may be split into a plurality of operations, and all the implementations are within the scope of protection of the present disclosure as long as the implementations follow the same logic relationship. Any insignificant modification or insignificant design introduced into the algorithm or process without changing the core designs of the algorithm and process falls within the scope of protection of the present disclosure.

Another embodiment of the present disclosure relates to an authorization control apparatus for a power device, which is provided in a control node. Fig. 5 is a first schematic diagram of an authorization control apparatus according to another embodiment of the present disclosure. The authorization control apparatus includes a first sending module 501, a registration module 502 and a second sending module 503.

The first sending module 501 is configured to send a protection setting command to an execution node, so that the execution node modifies a protection state to "protected" in responsive to the protection setting command. The protection setting command may be directly sent by the control node, or may be forwarded by the control node from the remote authorization device.

The registration module 502 is configured to register the execution node after receiving information indicative of successful protection setup fed back by the execution node. In an example, the registration module 502 registers the execution node according to the unique identification code of the execution node.

The second sending module 503 is configured to send a trigger command to the execution node after detecting startup of the execution node that has been registered and whose protection state is "protected".

In an example, after successfully matching the received authorization code with the locally generated authorization code of the execution node, the second sending module 503 sends a protection revoking command to the execution node, so that the execution node modifies the protection state to "not protected".

This embodiment is a device embodiment corresponding to the foregoing method embodiment performed by the control node, and this embodiment and the foregoing method embodiment may be implemented in cooperation. Related technical details and technical effects mentioned in the foregoing embodiments are still effective in this embodiment, and are not described herein again to reduce repetition. Correspondingly, related technical details mentioned in this embodiment may also be applied in the foregoing embodiments.

Another embodiment of the present disclosure relates to an authorization control apparatus for a power device, which is provided in an execution node, the details of the authorization control apparatus for the power device in this embodiment are described in detail as follows. The following content is only implementation details provided for ease of understanding. Fig. 6 is a second schematic diagram of an authorization control apparatus according to another embodiment of the present disclosure, and the authorization control apparatus includes: a receiving module 601, a protection setting module 602, and an execution module 603.

The receiving module 601 is configured to receive a protection setting command sent by a control node. The protection setting command carries attribute information of the execution node.

The protection setting module 602 is configured to modify a protection state to "protected", and feed back information indicative of successful protection setup to the control node, so that the control node registers the execution node upon receiving the information indicative of successful protection setup. In an example, the execution node determines whether the attribute information carried in the protection setting command sent by the control node matches attribute information of the execution node, and in a case where the attribute information carried in the protection setting command matches the attribute information of the execution node, the protection setting module 602 modifies the protection state from "not protected" to "protected", and feeds back information indicative of successful protection setup to the control node.

In another example, the protection setting module 602 is configured to, under a condition that the protection state of the execution node is "protected", in a case where no trigger command sent by the control node is received within a preset time, modify the protection state to "abnormal".

The execution module 603 is configured to, under a condition that the protection state is "protected", in a case where no trigger command sent by the control node is received within a preset time, prohibit operation of the power device.

In an example, after the execution module prohibits the operation of the execution node, the execution module receives a protection revoking command sent by the control node, restores the operation, and modifies the protection state to "not protected". This embodiment is a device embodiment corresponding to the method embodiment performed by the execution node, and this embodiment may be implemented in cooperation with the foregoing method embodiment. Related technical details and technical effects mentioned in the foregoing embodiments are still effective in this embodiment, and are not described herein again to reduce repetition. Correspondingly, related technical details mentioned in this embodiment may also be applied in the foregoing embodiments.

Each module involved in the described two embodiments of the present disclosure is a logic module. In practical applications, a logic unit may be a physical unit, may also be a part of a physical unit, and may also be implemented by a combination of a plurality of physical units. In addition, in order to highlight the inventive part of the present disclosure, the described two embodiments do not introduce units less closely related to solving the technical problem proposed in the present disclosure, but this does not indicate that there are no other units in the described two embodiments.

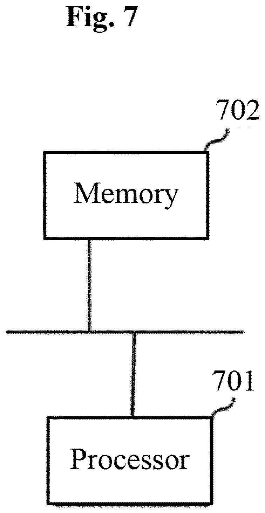

Another embodiment of the present disclosure relates to an electronic device. As shown in Fig. 7, the electronic device includes: at least one processor 701, and a memory 702 in communication connection with the at least one processor 701. The memory 702 stores an instruction that can be executed by the at least one processor 701, where the instruction is executed by the at least one processor 701, so that the at least one processor 701 can execute the authorization control method for the power device in each of the foregoing embodiments.

The memory and the processor are connected via a bus, the bus may include any number of interconnected buses and bridges, and the bus connects various circuits of the one or more processors and the memory together. The bus may also connect a variety of other circuits, such as peripheral devices, voltage regulators, and power management circuitry, which are well known in the art and therefore are not described further herein. The bus interface provides an interface between the bus and the transceiver. The transceiver may be one element or multiple elements, such as multiple receivers and transmitters, that provide a means for communicating with various other devices over a transmission medium. Data processed by a processor is transmitted on a wireless medium through an antenna, and further, the antenna receives the data and transmits the data to the processor.

The processor is responsible for managing the bus and general processing, and may further provide various functions, including timing, peripheral interfaces, voltage regulation, power management, and other control functions. The memory may be used to store data used by the processor in performing operations.

The above-mentioned product can execute the authorization control method provided in the embodiments of the present disclosure, and has a corresponding functional module and beneficial effect for executing the authorization control method. The technical details described in this embodiment are not described in detail, and reference can be made to the authorization control method provided in the embodiments of the present disclosure.

Another embodiment of the present disclosure relates to a computer-readable storage medium, which stores a computer program. The computer program implements the foregoing method embodiments when being executed by a processor.

A person having ordinary skill in the art may understand that all or a part of the operations of the authorization control methods in the foregoing embodiments may be implemented by a program instructing relevant hardware. The program is stored in a storage medium and includes several instructions for instructing a device (which may be a single chip, a chip, or the like) or a processor to execute all or a part of the operations of the authorization control methods in the embodiments of the present disclosure. The foregoing storage medium includes: any medium that can store program codes, such as a Universal Serial Bus (USB) flash disk, a removable hard disk, a Read-Only Memory (ROM), a Random Access Memory (RAM), a magnetic disk, or an optical disk.

A person having ordinary skill in the art may understand that the foregoing embodiments are exemplary embodiments for implementing the present disclosure, and in practical applications, various changes may be made in form and details without departing from the principle and scope of the present disclosure.

## Claims

1. An authorization control method for a power device, the authorization control method being performed by a control node and comprising:
sending a protection setting command to an execution node, so that the execution node modifies a protection state to "protected" in responsive to the protection setting command;
registering the execution node after receiving information indicative of successful protection setup fed back by the execution node; and
sending a trigger command to the execution node after detecting startup of the execution node that has been registered and whose protection state is "protected".

2. The authorization control method for the power device according to claim 1, wherein registering the execution node comprises:
acquiring a unique identification code of the execution node; and
registering the execution node according to the unique identification code.

3. The authorization control method for the power device according to claim 1 or 2, wherein after registering the execution node, the authorization control method further comprises:
in a case where an authorization code of the execution node is received, matching the received authorization code with an authorization code locally generated at the control node for the execution node; and
in a case where the matching succeeds, sending a protection revoking command to the execution node, so that the execution node modifies the protection state to "not protected" in responsive to the protection revoking command.

4. The authorization control method for the power device according to claim 3, wherein the authorization code of the execution node is calculated using a two-level encryption algorithm based on a unique identification code of the execution node.

5. The authorization control method for the power device according to claim 4, wherein the authorization code of the execution node is calculated using the two-level encryption algorithm based on the unique identification code of the execution node by executing following operations:
concatenating a reserved string and a date string sequentially to the unique identification code of the execution node to obtain a first updated string;
transposing the first updated string and concatenating the reserved string and the date string to the transposed first updated string to obtain a second updated string;
encoding the second updated string; and
calculating the authorization code of the execution node using the two-level encryption algorithm based on the encoded second updated string,
wherein the reserved string comprises one or a combination of following information: vendor information, region information, user information, and Media Access Control (MAC) address.

6. The authorization control method for the power device according to any one of claims 1 to 5, wherein the protection setting command carries attribute information of the execution node, so that the execution node, in a case of detecting that attribute information carried in the protection setting command matches attribute information of the execution node, modifies the protection state to "protected".

7. The authorization control method for the power device according to any one of claims 1 to 6, wherein before sending the protection setting command to the execution node, the authorization control method further comprises:
receiving a protection setting command sent by a remote authorization device;
sending the protection setting command to the execution node comprises:
forwarding, to the execution node, the protection setting command sent by the remote authorization device; and
after receiving the information indicative of the successful protection setup fed back by the execution node, the authorization control method further comprises:
forwarding the information indicative of the successful protection setup to the remote authorization device.

8. An authorization control method for a power device, the authorization control method being performed by an execution node and comprising:
receiving a protection setting command sent by a control node;
modifying a protection state to "protected", and feeding back information indicative of successful protection setup to the control node, so that the control node registers the execution node upon receiving the information indicative of successful protection setup; and
under a condition that the protection state is "protected", in a case where no trigger command sent by the control node is received within a preset time, prohibiting operation of the power device.

9. The authorization control method for the power device according to claim 8, wherein the authorization control method further comprises:
after prohibiting the operation of the power device, in a case where a protection revoking command sent by the control node is received, restoring the operation of the power device, and modifying the protection state to "not protected".

10. The authorization control method for the power device according to claim 8 or 9, wherein after modifying the protection state to "protected", the authorization control method further comprises:
under a condition that the protection state is "protected", in a case where no trigger command sent by the control node is received within the preset time, modifying the protection state to "abnormal".

11. The authorization control method for the power device according to any one of claims 8 to 10, wherein the protection setting command carries attribute information of the execution node;
before modifying the protection state to "protected", the authorization control method further comprises:
detecting whether the attribute information carried in the protection setting command matches attribute information of the execution node, and in a case where the attribute information carried in the protection setting command matches the attribute information of the execution node, modifying the protection state to "protected".

12. An authorization control apparatus for a power device, the authorization control apparatus being provided in a control node and comprising:
a first sending module, configured to send a protection setting command to an execution node, so that the execution node modifies a protection state to "protected" in responsive to the protection setting command;
a registration module, configured to register the execution node after receiving information indicative of successful protection setup fed back by the execution node; and
a second sending module, configured to send a trigger command to the execution node after detecting startup of the execution node that has been registered and whose protection state is "protected".

13. An authorization control apparatus for a power device, the authorization control apparatus being provided in an execution node and comprising:
a receiving module, configured to receive a protection setting command sent by a control node;
a protection setting module, configured to modify a protection state to "protected", and feed back information indicative of successful protection setup to the control node, so that the control node registers the execution node upon receiving the information indicative of successful protection setup; and
an execution module, configured to, under a condition that the protection state is "protected", in a case where no trigger command sent by the control node is received within a preset time, prohibit operation of the power device.

14. An authorization control system for a power device, comprising: a control node and an execution node, wherein
the control node is configured to execute the authorization control method for the power device according to any one of claims 1 to 7; and
the execution node is configured to execute the authorization control method for the power device according to any one of claims 8 to 11.

15. An electronic device, comprising:
at least one processor; and
a memory communicatively coupled to the at least one processor;
wherein the memory stores instructions executable by the at least one processor, and the instructions, when executed by the at least one processor, cause the at least one processor to execute the authorization control method for the power device according to any one of claims 1 to 7, or the authorization control method for the power device according to any one of claims 8 to 11.

16. A computer-readable storage medium, storing a computer program, wherein the computer program, when executed by a processor, causes the processor to execute the authorization control method for the power device according to any one of claims 1 to 7, or the authorization control method for the power device according to any one of claims 8 to 11.
